Europäisches Patentamt

European Patent Office

Office européen des brevets

(19)

(11) EP 1 217 265 A1

## (12) EUROPEAN PATENT APPLICATION

| | |
|---|---|
| (43) Date of publication:<br>**26.06.2002 Bulletin 2002/26** | (51) Int Cl.⁷: **F16H 61/30** |

(21) Application number: **01130588.5**

(22) Date of filing: **21.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Medico, Giuseppe**<br>**10098 Rivoli (IT)** |
| (30) Priority: **22.12.2000 IT TO001206** | (74) Representative: **Cerbaro, Elena, Dr. et al**<br>**STUDIO TORTA S.r.l.,**<br>**Via Viotti, 9**<br>**10121 Torino (IT)** |
| (71) Applicant: **MAGNETI MARELLI POWERTRAIN S.p.A.**<br>**10138 Torino (IT)** | |

(54) **Transmission system for a motor vehicle**

(57)     Transmission system, in which a single double-effect actuator (12), used to engage/release the gears, comprises a piston (17) which is mobile with reciprocating motion, and has different areas which face first (20) and second (19) chambers of the actuator. The first and second chambers are supplied respectively, directly by a source of pressurised fluid, and by a valve (36) of the proportional type, which is interposed between the source of pressurised fluid and the actuator.

FIG. 1

EP 1 217 265 A1

**Description**

The present invention relates to a transmission system for a motor vehicle.

Transmission systems are known, in which a gearbox of the mechanical type is connected to a hydraulic control circuit, which implements engagement/ release of the gears by means of first and second actuators, which receive pressurised fluid supplied by respective first and second valves, in particular first and second solenoid valves of the proportional type. This hydraulic circuit generally comprises a third actuator, which is connected to a respective third valve, and is used in order to implement opening/closure of the clutch.

In particular, it is known to control engagement of the even gears (R, 2, 4, 6) with a first solenoid valve, and engagement of the odd gears (1, 3, 5) by means of a second solenoid valve.

The hydraulic circuits of a known type are however quite complex, somewhat costly, and liable to failures.

The object of the present invention is to provide a transmission system which is provided with a hydraulic circuit to engage/release the gears, which is extremely simply and has a low cost.

More particularly, the object of the present invention is to provide a hydraulic circuit which can be used to engage/release the gears, which uses a single valve and a single actuator.

The preceding object is achieved by the present invention, in that it relates to a transmission system of the type described in claim 1.

The invention will now be described with particular reference to the attached figures, which represent a preferred, non-limiting embodiment of it, in which:

> figure 1 illustrates schematically a transmission system produced according to the dictates of the present invention; and
> figure 2 illustrates a block diagram of operations carried out by the system according to the present invention.

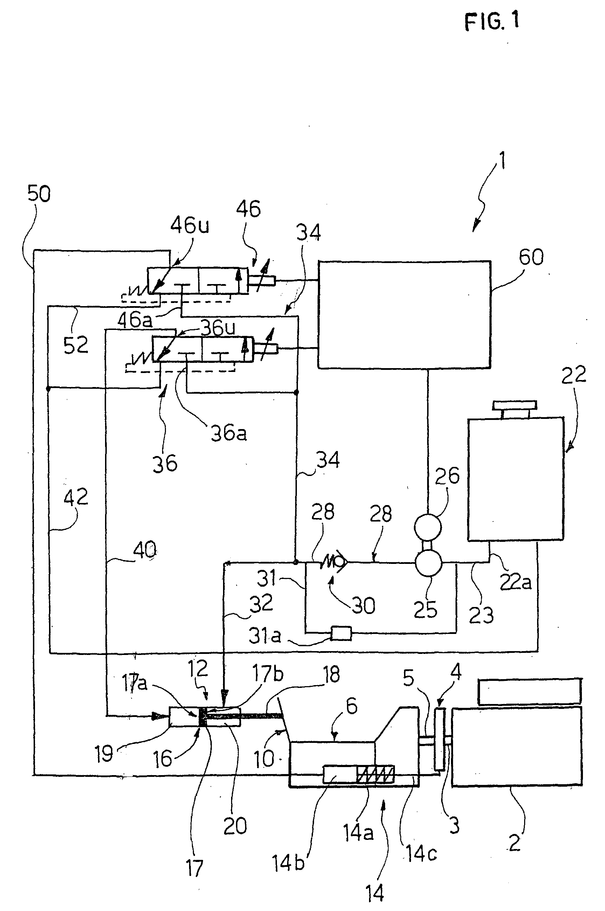

In figure 1, 1 illustrates as a whole a hydraulic circuit to control the transmission in motor vehicles.

In particular, the circuit 1 is applied to a transmission system in which an endothermic (petrol or diesel) engine 2, with an output shaft 3 which is connected, by means of interposition of a clutch 4, to an intake shaft 5 of a gearbox 6 of a mechanical type, can supply as output mechanical power to the wheels (not illustrated) of the vehicle (not illustrated).

In particular, the gearbox 6 is provided with a mobile unit 10, which can be actuated with reversible angular motion (or reversible translation) by an actuator 12 (which is described hereinafter), and is used in order to implement engagement and release of the gears. The gearbox 6 is also provided with a further mobile unit (not illustrated), which can be displaced under the thrust of a respective further actuator (not illustrated), and used for selection of the rank of the gears.

The clutch 4 is connected to single-effect actuator 14, which is mobile with reversible motion, and can implement the opening/closure of the clutch itself.

In particular, the actuator 14 is provided with resilient means 14a, in particular with a Belleville washer or a spring coupled with the actuator 14, which is integrated with the clutch disc, and can maintain the actuator in a position of rest, in which the clutch 4 is closed; the actuator 14 has a chamber 14b, which can receive a pressurised fluid, in order to give rise to the axial movement of an output unit 14c of the actuator 14, thus opening the clutch 4.

The actuator 12 is of the double-effect type, and generally comprises a cylindrical tubular casing 16, which defines an inner cylindrical cavity, along which there slides a piston 17, from which there extends a shaft 18, which is coaxial to the casing 16, and is used to move the unit 10. In particular, the piston 17 (in the example the piston has a cylindrical shape) is delimited by a first surface 17a, which has an area A, and by a second surface 17b, from which the shaft 18 extends; in the embodiment illustrated, the second surface 17b has an efficient area which is smaller than the first, and is equal to A/2. It is therefore apparent that the second surface 17b would have a different value of efficient area; advantageously, the efficient area of the second surface can be variable between 0.3 and 0.7 times the value of the area of the surface 17a.

Together with the casing 16, the first surface 17a of the piston delimits a rear chamber 19 of the actuator 12, whereas, together with the casing 16, the second surface 17b of the piston delimits a front chamber 20 of the actuator 12.

The hydraulic circuit 1 comprises an operating fluid (oil) tank 22, which has an output 22a, which is connected, by means of a pipe 23, to an intake of a pump 25, which is actuated by an electric motor 26. The pump 25 has an output which communicates with a pipe 28, along which there is disposed a non-return valve 30, which can prevent return of the operating fluid towards the pump 25. A by-pass pipe 31 extends from the end of the pipe 28 (downstream from the non-return valve 30), at the output 22a; along this pipe 31 there is disposed a maximum pressure valve 31a, which can open when the pressure along the pipe 28 reaches a threshold value Plim.

The pipe 28 also communicates at its output with a pipe 32, which supplies pressurised oil to the front chamber 20 of the actuator 12.

The pipe 28 also communicates at its output with a pipe 34, which communicates with an intake 36a of a solenoid value 36 of the proportional type, which has an output 36u, which communicates, via a pipe 40, with the rear chamber 19 of the actuator 12. When it is disposed in a regulation position, the solenoid valve 36 can regulate continuously the flow which flows through the solenoid valve itself, and thus the pressure of the fluid output; the solenoid valve 36 can also be disposed in a discharge position, in which it puts into communication the output 36, and thus the pipe 40, with a discharge pipe 42 which extends from the solenoid valve 36 to the tank 22.

The pipe 34 also communicates with an intake 46a of a solenoid valve 46 of the proportional type, which has an output 46u, which communicates via a pipe 50 with a supply intake of the actuator 14. When it is disposed in a regulation position, the solenoid valve 46 can regulate continuously the flow which flows through the solenoid valve itself, and thus the flow rate of the fluid output; the solenoid valve 46 can also be disposed in a discharge position, in which it puts into communication the output 46u, and thus the pipe 50, with a discharge pipe 52 which extends from the solenoid valve 46 to the tank 22.

A control logic unit 60 is also provided, which controls switching on/switching off of the electric motor 26, and controls the solenoid valves 36 and 46 by means of the methods which will be described hereinafter.

The following comments are made as far as functioning of the actuator 12 is concerned:

When the electric motor 26 is switched off, no pressure exists in the pipes 28, 31, 32 and 34, and consequently the actuator 12 will tend to remain at a standstill, without exerting any action on the mobile unit 10.

When the electric motor 26 is activated, the pressure in the pipe 28 will continue to increase until the maximum pressure valve 31a is opened, which supplies oil to the tank 22; the increase in pressure is thus limited, and the pressure in the hydraulic circuit Plinea stabilises around a regulated value equal to Plim (calibration value of the maximum pressure valve 31a).

In these conditions, if the solenoid valve 36 is in the discharge position, pressurised oil is supplied to the front chamber 20, and the piston 17 will tend to move towards the rear chamber, since there is applied to it a force F which is equal to:

$$F = A/2 * Plinea$$

If the solenoid valve 36 is disposed in the control position, pressurised oil is also supplied to the rear chamber 19, by applying an action of contrast to the surface 17a of the piston with the larger surface area. The solenoid valve 36 makes it possible to modulate the pressure Pmod of the oil output.

The force available Fris output from the actuator 12 is thus provided by the difference between the forces applied to the two surfaces of the piston, i.e.:

$$Fris. = F1 - F2$$

$$Fris. = (Pmod. \times A) - (Plinea \times A/2)$$

in which:

Plinea is the line pressure determined by the valve 31a; and
Pmod. is the pressure modulated by the solenoid valve 36, which is variable between 0 and Plinea.

By this means, the force exerted by the actuator 12 can vary continuously between the values:

$$Fris. = (0 \times A) - (Plinea \times A/2) = - Plinea \times A/2$$

(minimum value)

$$Fris. = (Plinea \times A) - (Plinea \times A/2) = Plinea \times A/2$$

(maximum value).

It is thus possible to implement reversible motion of the shaft 18, by engaging the gears in the two directions (towards even gears and towards odd gears).

In addition, in the absence of commands, when the pump 25 is switched off, residual forces are not exerted on the gear, since the line pressure is quickly cancelled out.

$$Fris. = (0 \times A)- (0 \times A/2) = 0.$$

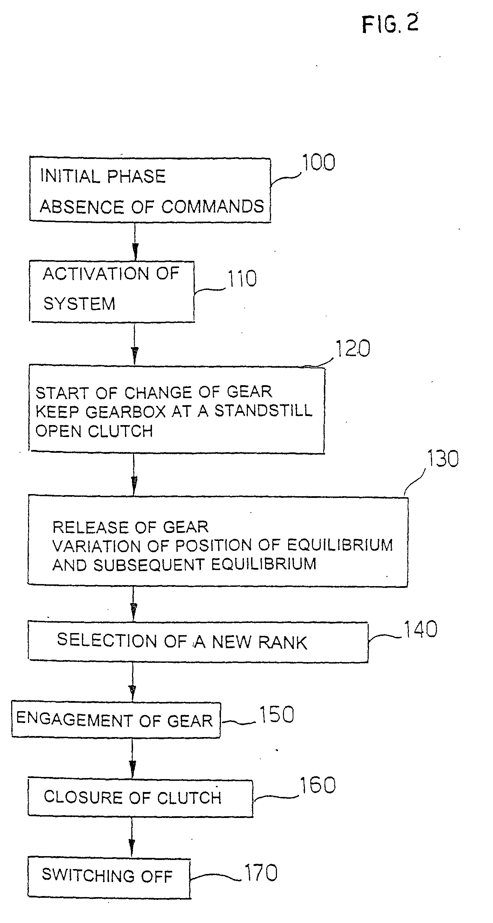

With particular reference to figure 2, a description will now be provided of the operations of change of gear implemented by the hydraulic circuit 1, under the control of the control logic unit 60.

Initially, a block 100 is reached, which implements an initial phase characterised by the absence of commands. In this phase, the pump 25 is switched off, and the hydraulic circuit 1 is in pressure conditions which are virtually zero. Consequently, the pressure in the pipe 50 is zero, the actuator 14 is not activated, and is maintained in the position of rest by the Belleville washer 14a, and the clutch 4 is closed. Similarly, the pressure in the pipes 32 and 40 is zero, and forces are not exerted on the mobile unit 10, which can be used for engagement/release of the gears.

Block 100 is followed by a block 110, in which the hydraulic circuit 1 is activated; in particular, on the basis of a command for a change of gear or engagement of the clutch, received by the unit 60, the logic unit 60 responds by activating the electric motor 26, in order to pressurise the hydraulic circuit 1.

Block 110 is followed by a block 120, in which the operation of change of gear is initiated.

In particular, in this phase, the logic unit 60 controls the solenoid valve 36, such as to create a situation of equilibrium, in which the resulting force on the cylinder 17 is substantially zero:

$$Fris. = (Pmod. \times A) - (Plinea \times A/2) = 0.$$

In other words, the solenoid valve 36 regulates the pressure Pmod, such that it is equal to a value of equilibrium:

$$Pmod = Plinea/2$$

In the meantime, the logic unit 60 disposes the solenoid valve 46 in the position of regulation, by supplying pressurised oil to the actuator 14, which operates opening of the clutch 4.

Block 120 is followed by a block 130, which operates release of the gear. In particular, when the clutch 4 has been opened by a required quantity, the gear engaged is released.

The release is obtained by interrupting the above-described situation of equilibrium, i.e. by varying (for example by increasing) the pressure Pmod regulated by the solenoid valve 36, in comparison with the equilibrium value; this therefore provides movement of the shaft 18, and angular rotation of the mobile unit 10, in a first angular direction.

After the gear has been released, the control logic unit 60 restores the equilibrium of the pressure forces generated on the two surfaces of the piston 17.

Block 130 is followed by a block 140, which operates the selection of a new rank (in a known manner, by means of the further actuator, which is not illustrated).

Block 140 is followed by a block 150, which, after the new rank required has been reached, commands the solenoid valve 36 (for example by decreasing the pressure Pmod), thus modifying once again the equilibrium of the pressure forces of the actuator, in order to obtain motion of the actuator 12 in the opposite direction, and engagement of a new gear; this therefore provides the movement of the shaft 18, and angular rotation of the mobile unit 10 according to a second angular direction.

After the gear has been engaged, the control logic unit 60 restores the equilibrium of the pressure forces generated on the two surfaces of the piston 17.

Block 150 is followed by a block 160, which modifies the regulation position previously reached by the solenoid valve 46 regulating the flow rate of the oil supplied to the actuator 14, which moves under the thrust of the spring 14a, and closes the clutch 4.

Block 160 is followed by a block 170, in which the logic unit 60 commands switching off of the electric motor 26, and thus deactivation of the hydraulic circuit 1. The above-described operations (blocks 100-170) are repeated after a new request for a change of gear received by the logic unit 60.

From the foregoing description, the advantages of the transmission system according to the present invention are apparent, since a single actuator and a single solenoid valve are used in order to command engagement/release of the gears.

By this means, the system which is the subject of the present invention permits a substantial reduction in the costs, and simplification of the hydraulic circuit.

It should be noted that in some operating conditions, the pressure value Plinea is not determined sufficiently accurately, owing to the effect of the design tolerances of the valve 31a, and of the internal friction of the actuator 12.

In these conditions, the unit 60 can implement a manoeuvre of self-learning, by means of which the solenoid valve 36 is sent a command which can give rise to limited movement of the piston 17 in two opposite directions.

As a result of the effect of the friction forces (Fatt.), which oppose the movement inside the actuator 12, two pressure values Pmod.1, Pmod. 2 will be obtained, relative to the movement of the actuator in the two opposite directions, i.e.:

$$Pmod. 1 = Plinea/2 - Fatt./A$$

$$Pmod. 2 = Plinea/2 + Fatt./A$$

The control logic unit 60 will detect the values of the control signal, which are necessary in order to produce the two pressure values Pmod. 1 and Pmod. 2. These values can be detected in different operating conditions, and can optionally be updated during the life of the vehicle, and stored in the non-erasable memory of the control logic unit 60.

Similarly, it is possible to detect characteristic values of the valve 36 for control of engagement/release of the gears. This makes it possible to increase the accuracy of the force control of the actuator 12.

Finally, it is apparent that modifications and variations can be made to the transmission system described, without departing from the scope of protection of the present invention.

For example, the oil tank 22 need not be present, and in this case the oil would be collected directly from the gearbox, using the oil which is normally present inside the gearbox itself.

**Claims**

1.　Transmission system, in which an endothermic engine (2) has an output shaft (3), which is connected, by means of interposition of a clutch (4), to an intake shaft (5) of a gearbox (6), which can supply as output mechanical power to the wheels of a vehicle, and is provided with a mobile unit (10) for engagement/release of the gears; the said transmission system being provided with a hydraulic circuit (1), in which actuator means (12) which are activated by an operating fluid are connected to the said mobile unit, in order to implement engagement/release of the gears, **characterised in that** the said actuator means comprise:

- a single double-effect actuator (12), in which a piston (17), which is mobile with reciprocating motion, has different areas (A;A/2) which face first (20) and second (19) chambers of the double-effect actuator;
- a valve (36) of the proportional type, which can supply as output (4) operating fluid to one (19) of the said chambers, by modulating the pressure of the fluid supplied to the said actuator, in order to regulate the force exerted by the said piston (17);
- a pressurised operating fluid generator circuit (22,25,26,28,30), which can generate an operating fluid with a pre-determined pressure (Plinea); the said operating fluid generator circuit being able to supply the said operating fluid as intake to the said valve of the proportional type.

2. System according to claim 1, **characterised in that** the said operating fluid generator supplies the operating fluid (32) directly to the first chamber (20) of the said actuator (12); the said operating fluid generator supplying operating fluid to the said second chamber (19) via the said proportional valve (36).

3. System according to claim 2, **characterised in that** the smaller area (A/2) of the said piston corresponds to the said first chamber.

4. System according to claim 3, **characterised in that** the said smaller area is between 0.3 - 0.7 times the size of the larger area.

5. System according to any one of the preceding claims, **characterised in that** the said pressurised operating fluid generator circuit (22,25,26,28,30) comprises:

   an operating fluid tank (22);
   a pump (25), which receives as intake (23) the operating fluid obtained from the tank (22);
   a maximum pressure valve (31a), which receives the operating fluid as output (28) from the said pump, and can open in order to make the operating fluid (31) return towards the tank (22), when the pressure of the operating fluid reaches a threshold value (Plim).

6. System according to any one of the preceding claims, **characterised in that** the said generator circuit (22,25,26,28,30) is activated as the result of a command for a change of gear, or a request for movement of the clutch, and is deactivated as a result of execution of the said change of gear.

7. System according to any one of the preceding claims, **characterised in that** it comprises a control logic unit (60), which can implement control of the said valve, in order to implement a change of gear; the said control unit comprising:

- pause means (100), which can implement initial deactivation of the said generator circuit, in order to maintain the said actuator (12) in a position of rest;
- means (110) for pre-activation, which can be activated as a result of a command for a change of gear or opening of the clutch received from the said control logic unit (60), in order to activate the said generator circuit;
- first control means (120), which can control the said valve of the proportional type (36), such that a situation of equilibrium of forces is implemented inside the actuator (12), the resulting force of which on the cylinder (17) is substantially zero, and the mobile unit is not activated; the said control means (120) also being able to implement opening of the clutch (4);
- means (130) for release, which can modify the said situation of equilibrium of forces, by varying the pressure (Pmod) regulated by the solenoid valve (36), and by implementing movement of the said piston (17) and release of the gear previously engaged; the said means for release being able subsequently to restore the equilibrium of the pressure forces on the said piston (12);
- means (140) which can operate selection of a new rank;
- means (130) for engagement, which can modify the situation of equilibrium, by varying the pressure (Pmod) regulated by the valve of the proportional type (36), and implementing movement of the said piston (17), and engagement of the gear previously selected; the said means for engagement being able subsequently to restore the equilibrium of the pressure forces on the said piston (12);
- means (160) which can command closure of the said clutch; and
- means (170) for deactivation, which can command deactivation of the said generator circuit, as a result of the change of gear which has taken place.

8. System according to claim 7, **characterised in that** the said hydraulic circuit additionally comprises a further valve (46) of the proportional type, which receives as intake pressurised fluid from the said circuit (22,25,26,28,30) for generation of pressurised operating fluid, and supplies as output fluid to an actuator (14), which can open/close the said clutch; the said phase of opening and closure of the said clutch being implemented by modulating the flow rate output from the said further valve (46).

9. System according to claim 7, **characterised in that** it comprises means for self-learning, by means of which the said valve of a proportional type (36) is sent a command which can give rise to limited movement of the piston (17) along two opposite directions, thus producing two pressure values Pmod. 1, Pmod. 2, relative to the movement of the actuator in the two opposite directions;

the said means for self-learning also being able to detect the values of the command signal which are necessary in order to produce the two pressure values Pmod. 1 and Pmod. 2; the said pressure values Pmod. 1 and Pmod. 2 being detected in different operating conditions, which are updated during the life of the vehicle, and stored.

FIG. 1

FIG. 2

INITIAL PHASE
ABSENCE OF COMMANDS — 100

ACTIVATION OF
SYSTEM — 110

START OF CHANGE OF GEAR
KEEP GEARBOX AT A STANDSTILL
OPEN CLUTCH — 120

RELEASE OF GEAR
VARIATION OF POSITION OF EQUILIBRIUM
AND SUBSEQUENT EQUILIBRIUM — 130

SELECTION OF A NEW RANK — 140

ENGAGEMENT OF GEAR — 150

CLOSURE OF CLUTCH — 160

SWITCHING OFF — 170

European Patent Office

Application Number

EP 01 13 0588

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 789 171 A (EATON CORP) 13 August 1997 (1997-08-13) | 1-4 | F16H61/30 |
| A | * column 1, line 53 - column 2, line 58 * * column 6, line 47 - column 8, line 7; figures 1-3 * | 5-7 | |
| X | FR 2 756 597 A (RENAULT) 5 June 1998 (1998-06-05) | 1 | |
| A | * page 1, line 1 - page 5, line 32; figures 1,8 * | 2,5-7 | |
| X | DE 196 37 001 A (LUK GETRIEBE SYSTEME GMBH ;ATLAS FAHRZEUGTECHNIK GMBH (DE); LUK FA) 13 March 1997 (1997-03-13) | 1 | |
| A | * page 1, line 23 - page 5, line 12; figures 13-15 * | 2,5-7 | |
| X | PATENT ABSTRACTS OF JAPAN vol. 012, no. 145 (M-693), 6 May 1988 (1988-05-06) -& JP 62 266254 A (TOYOTA MOTOR CORP), 19 November 1987 (1987-11-19) | 1 | |
| A | * abstract; figures * | 2,5-7 | F16H F16D |
| P,X | EP 1 081 417 A (VOLKSWAGENWERK AG) 7 March 2001 (2001-03-07) * paragraph '0001! * * paragraph '0005! - paragraph '0008! * * paragraph '0026!; figure 1 * | 1 | |

TECHNICAL FIELDS SEARCHED (Int.Cl.7)

F16H
F16D

The present search report has been drawn up for all claims

| Place of search | Date of completion of the search | Examiner |
|---|---|---|
| THE HAGUE | 19 February 2002 | Daehnhardt, A |

EPO FORM 1503 03 82 (P04C01)

**ANNEX TO THE EUROPEAN SEARCH REPORT
ON EUROPEAN PATENT APPLICATION NO.**

EP 01 13 0588

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2002

| Patent document cited in search report | | Publication date | Patent family member(s) | | Publication date |
|---|---|---|---|---|---|
| EP 0789171 | A | 13-08-1997 | US | 5661998 A | 02-09-1997 |
| | | | BR | 9700209 A | 27-10-1998 |
| | | | CN | 1165927 A | 26-11-1997 |
| | | | DE | 69708170 D1 | 20-12-2001 |
| | | | EP | 0789171 A2 | 13-08-1997 |
| | | | JP | 9210202 A | 12-08-1997 |
| FR 2756597 | A | 05-06-1998 | FR | 2756597 A1 | 05-06-1998 |
| DE 19637001 | A | 13-03-1997 | DE | 19637001 A1 | 13-03-1997 |
| | | | AU | 7618796 A | 01-04-1997 |
| | | | BR | 9606640 A | 30-09-1997 |
| | | | WO | 9710456 A2 | 20-03-1997 |
| | | | DE | 19680781 D2 | 19-03-1998 |
| | | | FR | 2738608 A1 | 14-03-1997 |
| | | | FR | 2762658 A1 | 30-10-1998 |
| | | | GB | 2309494 A ,B | 30-07-1997 |
| | | | JP | 10512356 T | 24-11-1998 |
| | | | US | 6116391 A | 12-09-2000 |
| JP 62266254 | A | 19-11-1987 | NONE | | |
| EP 1081417 | A | 07-03-2001 | DE | 19941011 A1 | 10-05-2001 |
| | | | EP | 1081417 A2 | 07-03-2001 |

EPO FORM P0459

For more details about this annex : see Official Journal of the European Patent Office, No. 12/82